# EUROPEAN PATENT APPLICATION

(11) **EP 1 739 332 A1**
(43) Date of publication of application: **03.01.2007**
(21) Application number: 06008995.0
(22) Date of filing: 29.04.2006
(51) Int. Cl.: F16J 15/32

(54) **Radial lip seal**

(30) Priority: 27.06.2005 US 167462
(71) Applicant: Carl Freudenberg KG, 69469 Weinheim (DE)
(72) Inventor: Berdichevsky, Alexander, Farmington Hills, MI 48331 (US); Szparagowski, Raymond Lee, Bowling Green, OH 43402 (US)

(57) **Abstract**

Radial shaft seal (10,70) designs are provided in which the use of PTFE and other flouro-elastomers are utilized for the unique chemical and heat resistance properties. Additional retaining rings (22,24) and/or elastomer sealing rings (82) are provided to improve the bore retention force of the seal within the seal housing.

## Description

### FIELD OF THE INVENTION

The present invention relates to seals for rotary shafts, and more particularly, to an improved radial lip seal for sealing around a rotatable shaft.

### BACKGROUND AND SUMMARY OF THE INVENTION

Radial lip seals are used to prevent fluids such as liquids or gases from leaking along a rotatable shaft from a region filled with this fluid in an apparatus in which the shaft is mounted to a region without this fluid. Such radial lip seals typically include a circular or annular seal ring or body which is sealably fit within a seal bore formed within a seal housing surrounding the rotatable shaft. A sealing lip extends radially inward from the seal body to slidably contact against the rotatable shaft and provide a leak-tight seal therewith. Known lip seal technology and in particular, radial seal technology, commonly uses elastomer rubbers. However, these elastomer seals have a somewhat limited temperature and velocity range in which they can operate as radial lip seals. Elastomer rubber radial lip seals also have a limited shelf life and have uses that are limited to a somewhat narrow range of compatible fluids and gases.

Accordingly, polytetraflouroethylene (PTFE) and other flouro-elastomer materials have found a wide use in sealing and other applications due to their unique chemical and heat resistant properties. Seals constructed entirely out of PTFE or other flouro-elastomer materials have limited working temperature range due to loss of bore retention force. In particular, as the seals are heated up and subsequently cooled, the seals can expand and shrink to a size smaller than its original size, thus causing the seal to lose its retention capability.

Accordingly, the present invention provides structural retaining rings assembled into or onto the PTFE or other flouro-elastomer seal such that the seal component is being squeezed between the two retaining rings with one or both of the retaining rings being made of metal, or alternatively, plastic. The retaining rings provide the seals with structural rigidity and bore retention in a wide temperature range.

According to yet another aspect of the present disclosure, a PTFE or other flouro-elastomer shaft seal is provided with a rubber elastomer sealing ring which provides a sealing engagement between the interior surface of the bore and the seal housing and the outermost surface of the PTFE or other flouro-elastomer seal body.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a schematic cross-sectional side view of a radial lip seal constructed according to the principles of the present invention, as shown surrounding a shaft;
Figure 2 is a cross-sectional view of a radial shaft seal according to the principles of the present invention;
Figure 3 is a cross-sectional view of an alternative radial shaft seal according to the principles of the present invention;
Figure 4 is a cross-sectional view of a second alternative radial shaft seal according to the principles of the present invention;
Figure 5 is a cross-sectional view of a third alternative radial shaft seal according to the principles of the present invention;
Figure 6 is a cross-sectional view of an elastomer seal ring utilized in combination with the seal shown in Figure 5; and
Figure 7 is across0sectional view of a fourth alternative radial shaft seal according to the principles of the present invention.

### DETAILED DESCRIPTION OF THE PREFERRED EMBODIMENTS

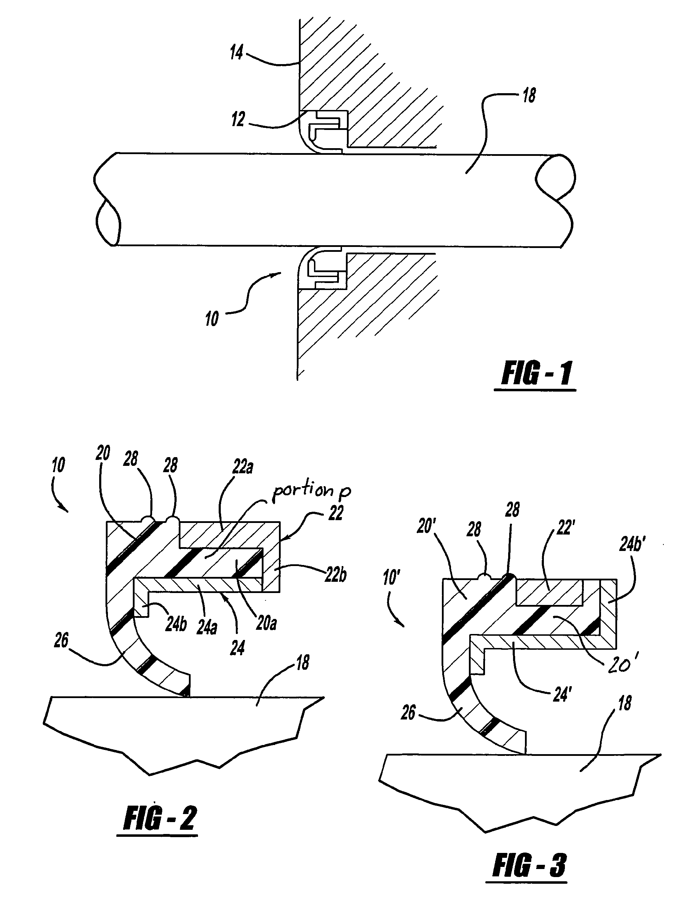

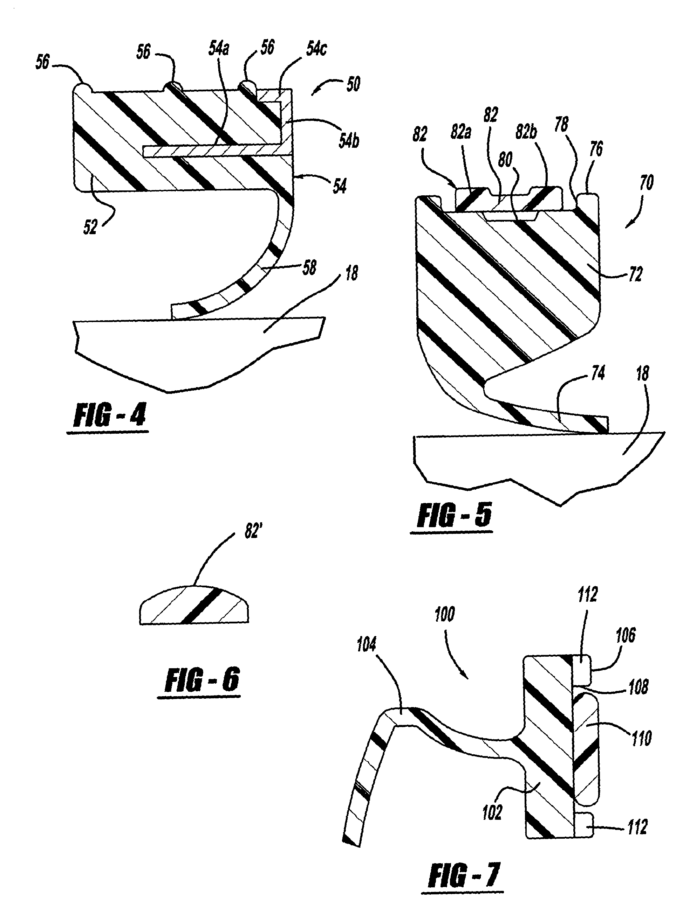

The following description of the preferred embodiment(s) is merely exemplary in nature and is in no way intended to limit the invention, its application, or uses. With reference to Figures 1 and 2, a radial shaft seal 10 is shown received in a bore 12 of a seal housing 14 and engaging a rotating shaft 18. With reference to Figure 2, the radial shaft seal 10 includes an annular body 20 preferably formed of PTFE or other flouro-elastomeric material. An outer retaining ring 22 is disposed radially outward of a portion 20a of the annular body 20. An inner retaining ring 24 is disposed radially inward of the portion 20a of the annular body 20 so as to fix the portion 20a of annular body 20 between the outer retaining ring 22 and inner retaining ring 24. The outer retaining ring 22 is provided with a cylindrical body portion 22a and radially inwardly extending flange portion 22b which extends over an end of the portion 20a of annular body 20. The inner retaining ring 24 abuts against the radially inwardly extending flange portion 22b of outer retaining ring 22. The inner retaining ring 24 includes a cylindrical body portion 24a and a radially inwardly extending flange portion 24b that is disposed adjacent to a radially inwardly extending sealing lip 26 which extends from the annular body 20.

The outer retaining ring 22 and inner retaining ring 24 are formed from metal or plastic materials which can be either snap-inserted into the prepared seating places within the annular body 20, or alternatively, the annular body can be formed (plastically, or otherwise) around the inner and outer retaining rings 24, 22 during the manufacturing process. The annular body 20 is preferably provided with beads 28 extending from a radially outermost surface thereof for improving the sealing/retention within the housing bore 12. Preferably, the material used for making the retaining rings 22, 24 (metal, plastic, or other suitable material) provides structural rigidity and bore retention in a wide temperature range.

According to an alternative embodiment of the radial shaft seal 10' as shown in Figure 3, the outer retaining ring 22' is shown to merely include a cylindrical ring portion recessed in the outermost surface of the annular body 20' while the inner retaining ring 24' is further provided with a radially outwardly extending flange portion 24b' that extends along an end face of the annular body 20'. It should be understood that other variations of the shapes and configurations of the inner and outer retaining rings 24, 22 can also be utilized without departing from the spirit and scope of the present disclosure.

With reference to Figure 4, a still further alternative embodiment of the radial shaft seal 50 is provided. The radial shaft seal 50 includes an annular body portion 52 having an embedded retaining ring 54 received therein. The retaining ring 54 includes a cylindrical inner ring portion 54a with a radially outwardly extending flange portion 54b that terminates in a cylindrical outer ring portion 54c. The retaining ring 54 is preferably made of metal or other plastic material that provides sufficient structural rigidity and bore retention characteristics along a wide temperature range. The annular body 52 is provided with a plurality of beads 56 on an outermost surface thereof for providing sealing/retention of the seal within the bore 12 of a seal housing 14. In the event of expansion and contraction of the PTFE or other flouro-elastomer due to temperature variations, the retaining ring 54 is also press-fit within the recessed bore 12 of the seal housing 14 and maintains retention of the radial shaft seal 50 therein. The annular body 52 includes a radially inwardly extending sealing lip 58 that engages the shaft 18.

With reference to Figure 5, an alternative shaft seal design 70 is shown including a continuous annular body portion 72 preferably formed of PTFE or other flouro-elastomer material. A sealing lip 74 extends radially inward from the body portion 72 and engages a rotating shaft 18. The outermost surface 76 of the body portion 72 includes a first annular recess 78 which further includes a recessed groove portion 80 disposed in a bottom portion thereof. An elastomeric sealing ring 82 is disposed in the annular recess 78 and bridges the recessed groove portion 80. The radial shaft seal 70 is inserted into a recessed bore 12 of a seal housing 14 with the elastomeric ring 82 providing a sealing engagement between the interior surface of the bore 12 and exterior surface 76 of shaft seal body portion 72. When the seal 70 is heated up during use, the expansion and contraction thereof is accommodated by the outermost surface 76 being smaller than the interior diameter of the recessed bore 12 provided in the seal housing 14. Thus, expansion of the body portion 72 can be accommodated without the body portion 72 being subjected to compression forces that would normally occur if the body portion 72 were in a tight fit with the recessed bore 12.

Furthermore, the recessed groove portion 80 provides an extra space which may allow for the elastomeric ring 82 to deform into while being compressed between the PTFE component and the bore 12. The elastomeric sealing ring 82 is disclosed as including axially spaced bulb portions 82a, 82b and an intermediate portion 82c connected to the larger bulb portions 82a, 82b. It should be understood, however, that other configurations of the elastomeric seal could also be utilized including a D-shaped cross-section elastomeric ring seal 82', as illustrated in Figure 6. The elastomeric sealing ring 82, 82' preferably provides retention and sealing between the annular body 72 and the interior surface of recessed bore 12 while not being as susceptible to expansion and contraction due to temperature variations.

With reference to Figure 7, an alternative shaft seal 100 is shown including an annular body portion 102 made from PTFE or other flouro-elastomer. A seal lip 104 extends radially inwardly from the annular body portion 102. The annular body portion 102 includes a discontinuous outermost surface 106 having an annular recess 108 for receiving an elastomeric ring 110. The discontinuous outermost surface includes axially extending and circumferentially spaced slots 112 creating discontinuities in the outermost surface 106. The discontinuities of the outermost surface 106 prevent plastic deformations in the PTFE or other flouro-elastomer material. The outermost surface 106 can tightly engage the inner surface of the bore 12 to assist the elastomer ring in providing seal retention, however, during expansion of the seal material, the discontinuities accommodate such expansion without imparting plastic deformation.

With the design according to the principles of the present invention, the radial shaft seal is designed to utilize PTFE and other flouro-elastomer materials which have unique chemical and heat resistant properties that provide good sealing characteristics, while the problem of providing sufficient bore retention forces is overcome by the use of metal, or alternatively, plastic components which provide the seals with structural rigidity and bore retention and a wide temperature range (Figs. 2-4). An added advantage of the current design is that the structural components are not exposed to the environment and, therefore, can be made from cheaper grades of materials or with less expensive finish coatings.

Yet another advantage is that the static sealing between the bore and a seal outside diameter can rely either on the PTFE or other flouro-elastomer material, or on the structural retaining rings, or both, reducing needs for extra sealing elements, such as molded rubber elements or assembled elastomeric gaskets/O-rings. Yet another advantage is that no sealing is required between retaining rings and the PTFE element, thus improving overall sealing reliability. The use of PTFE or other flouro-elastomer materials is further accomplished by a specially designed annular recess in the outermost surface for receiving an elastomeric ring therein, and/or by providing a discontinuous outermost surface of the seal.

The description of the invention is merely exemplary in nature and, thus, variations that do not depart from the gist of the invention are intended to be within the scope of the invention. Such variations are not to be regarded as a departure from the spirit and scope of the invention.

## Claims

1. A seal assembly, comprising: an annular body (20) of sealing material; a sealing lip portion (26) extending from and integrally formed with said annular body (20); an outer retaining ring (22) disposed radially outward of a portion (p) of said annular body (20); an inner retaining ring (24) disposed radially inward of said portion (p) of said annular body (20) so as to fix said portion (p) of said annular body between said outer and inner retaining rings.

2. The seal assembly according to claim 1, wherein said outer retaining ring and said inner retaining ring are connected to one another by a radially extending web portion integrally formed with said inner and outer retaining rings.

3. The seal assembly according to claims 1 to 2, wherein said outer retaining ring is made from metal.

4. The seal assembly according to claims 1 to 2, wherein said outer retaining ring is made from plastic.

5. The seal assembly according to claims 1 to 2, wherein said inner retaining ring is made from metal.

6. The seal assembly according to claims 1 to 2, wherein said inner retaining ring is made from plastic.

7. The seal assembly according to claims 1 to 6, wherein said inner retaining ring (24') includes a radially outwardly extending flange (24b') extending over an edge of said annular body.

8. The seal assembly according to claims 1 to 6, wherein said outer retaining ring (22, 22a) includes a radially inwardly extending flange (22b) extending over an edge of said annular body.

9. The seal assembly according to claims 1 to 7, wherein said inner retaining ring (24) includes a radially inwardly extending flange (24b) portion adjacent to said sealing lip portion (26).

10. The seal assembly according to claims 1 to 9, wherein said body portion includes at least one radially outwardly extending retention bead (28).

11. The seal assembly according to claims 1 to 10, wherein said sealing material is PTFE.

12. A seal assembly, comprising: an annular body of sealing material, said annular body including an annular recess in an outermost surface thereof, said annular recess including a further recessed groove portion disposed in a bottom portion thereof; a sealing lip portion extending from and integrally formed with said annular body; and an elastomeric ring disposed in said annular recess and bridging said groove.

13. The seal assembly according to claim 12, wherein said elastomeric ring has a D-shaped cross-section.

14. The seal assembly according to claims 12 to 13, wherein said elastomeric ring includes axially spaced bulb portions and an intermediate portion connected to said bulb portions.

15. The seal assembly according to claim 12, wherein said outermost surface is discontinuous.

16. A seal assembly, comprising: an annular body of sealing material, said annular body including an annular recess in an outermost surface thereof, said outermost surface being discontinuous; a sealing lip portion extending from and integrally formed with said annular body; and an elastomeric ring disposed in said annular recess.
